# EUROPEAN PATENT APPLICATION

(11) **EP 1 524 598 A2**
(43) Date of publication of application: **20.04.2005**
(21) Application number: 04251514.8
(22) Date of filing: 17.03.2004
(51) Int. Cl.: G06F 9/46

(54) **Program and apparatus for blocking information leaks, and storage medium for the program**

(30) Priority: 16.10.2003 JP 2003356730
(71) Applicant: FUJITSU LIMITED, Kawasaki-shi, Kanagawa 211-8588 (JP)
(72) Inventor: Miyamoto, Yuji, Fujitsu Broad Sol. & Cons. Inc., Tokyo 141-8581 (JP); Yamanaka, Yusuke, Fujitsu Broad Sol. & Cons. Inc., Tokyo 141-8581 (JP); Tian, Yue, Fujitsu Broad Sol. & Cons. Inc., Tokyo 141-8581 (JP); Sasaki, Takaoki, Fujitsu Broad Sol. & Cons. Inc., Tokyo 141-8581 (JP)
(74) Representative: Stebbing, Timothy Charles

(57) **Abstract**

A security apparatus 1 to block information leaks via access control wherein, when a user logs in, the security apparatus 1 retrieves access right information for this user from an access right information file 4a and creates a use restriction table 6a for the user. The use restriction table 6a indicates use restrictions on each resource 3. The apparatus 1 acquires an access request for a resource 3 from an operating system 2 before operating the resource 3. When acquiring an access request, the apparatus extracts use restriction information on the resource 3 specified by the access request from the use restriction table 6a and restricts the use of the resource according to the use restriction information.

## Description

The present invention relates to a program and apparatus for blocking information leaks, and a storage medium for the program, and more particularly, is applied to a program and apparatus for blocking information leaks via access control to computer-system resources, and a program medium for the program.

Operating systems (OS) have an access control function to block information leaks by allowing only authorized users to access files. Although an OS can control access for reading, writing, moving and copying of files, it cannot perform more advanced control such that, for example, files are allowed to be used only on a computer but takeout (duplication or removal for external use) of data, for example by printing, or via media or network connections is not allowed.

In addition to the OS function, an access control method has been proposed. The method comprises the steps of acquiring an access request for a resource from a process or OS before operating the resource, and allowing or rejecting the request depending on whether the request has an access right or not (for example, see paragraphs [0057] - [0076] and Fig. 2 in Japanese Unexamined Patent Publication No. 2003-44297).

In such access control, an access right management table is prepared in advance, which shows access rights on resources (files, networks, storage devices, monitors and external devices). When an access request is made by an application, the table is searched for access right information on the resource specified by the request to determine whether to allow the request. If yes, the access request is given to the OS. If no, the user is notified that his/her request has been rejected.

In addition, there also exists a method of managing and confirming that information has been taken out, by recording and sending to a server a log of operations on resources.

In the conventional access control to block information leaks, all access requests are acquired to check their access rights, resulting in an increased processing load.

The conventional access control of acquiring access requests for resources from an application or an OS and checking their access rights can control takeout of data by printing, or via other media or networks. This control, however, requires all access requests for the resources to be acquired, including ones that the OS could reject through its own function, and for them to be checked by reference to the access right management table to see if they have access rights. This results in increasing processing load and deteriorating processing performance.

To create the access right management table, detailed access rights are set for each specific resource, for example, for each file, communication data (port) and display screen. As an example, to specify a resource, a file name and file ID are used for a file; a host name, port number and IP address for communication data; and an object name and address for a memory. Further, detailed access rights are set on each resource. As an example, the access rights are set for copy, move into another medium, print, and write into a shared memory. In the access control, all the access rights have to be checked to see if an access request satisfies all conditions, which results in increased load in the check process.

In addition, the access right management table may have poor security and it cannot be detected if the table has been falsified.

Further, to constantly update the log of operations, the server has to be constantly connected to a network. Therefore, the method is not suitable for personal computers. Although there is a method of temporarily keeping a file in a local memory and periodically sending it to the server, the file is possibly deleted before sending to the server. As a result, it may be difficult to grasp the resource use without fail.

In view of the foregoing, it is therefore desirable to provide a program and apparatus for reliably blocking information leaks via access control with a simpler process, and a storage medium for the program.

According to a first aspect of the invention, there is provided a program to block information leaks via access control to resources. The program, when executed by a computer, causes the computer to perform the steps of: storing, for each user, access right information indicating access rights on the resources, and when a prescribed user logs in, extracting access right information for the user and creating a use restriction table prescribing use restrictions on each resource for the user based on the extracted access right information; acquiring an access request for a resource from an operating system before operating the resource; and obtaining use restriction information on the resource specified by the access request from the use restriction table and restricting the use of the resource according to the use restriction information obtained.

According to a second aspect of the invention, there is provided an apparatus for blocking information leaks via access control to resources. The apparatus comprises: an access right information storage unit for storing, for each user, access right information indicating access rights on the resources; a use restriction table setting unit for, when a prescribed user logs in, extracting access right information for the user from the access right information storage unit and creating a use restriction table prescribing use restrictions on each resource for the user based on the extracted access right information; a use restriction table storage unit for storing the use restriction table; a request acquisition unit for acquiring an access request for a resource from an operating system before operating the resource; and a use restriction unit for obtaining use restriction information on the resource specified by the access request from the use restriction table and restricting the use of the resource according to the use restriction information obtained.

According to a third aspect of the invention there is provided a storage medium storing a program to block information leaks via access control to resources.

The above aspects of the invention enable data (information) to be securely stored and processed on a personal computer or network, without unduly increasing the processing load and thereby decreasing processing performance.

The above and other features and advantages of the present invention will become apparent from the following description when taken in conjunction with the accompanying drawings which illustrate preferred embodiments of the present invention by way of example, and in which:
Fig. 1 is a conceptual view of the present invention;
Fig. 2 shows the construction of a security apparatus of one embodiment of the present invention;
Fig. 3 shows the hardware construction of the security apparatus of the embodiment of the present invention;
Fig. 4 shows an example of a policy setting screen of the embodiment of the present invention;
Fig. 5 shows an example of a policy file of the embodiment of the present invention;
Fig. 6 shows a procedure of policy detection at a time of user login according to the embodiment of the present invention;
Fig. 7 is a flowchart showing a procedure from user login to creation of a use restriction table according to the embodiment of the present invention;
Fig. 8 shows an example of the use restriction table of the embodiment of the present invention;
Fig. 9 is a flowchart showing a procedure of resource use restriction control according to the embodiment of the present invention;
Fig. 10 shows an example of a log file format of the embodiment of the present invention; and
Fig. 11A to 11D show the contents of operation information in a log file of the embodiment.

Preferred embodiments of the present invention will be described below with reference to the accompanying drawings. The following description will first outline the invention and then give a more specific explanation for how the invention may be implemented.

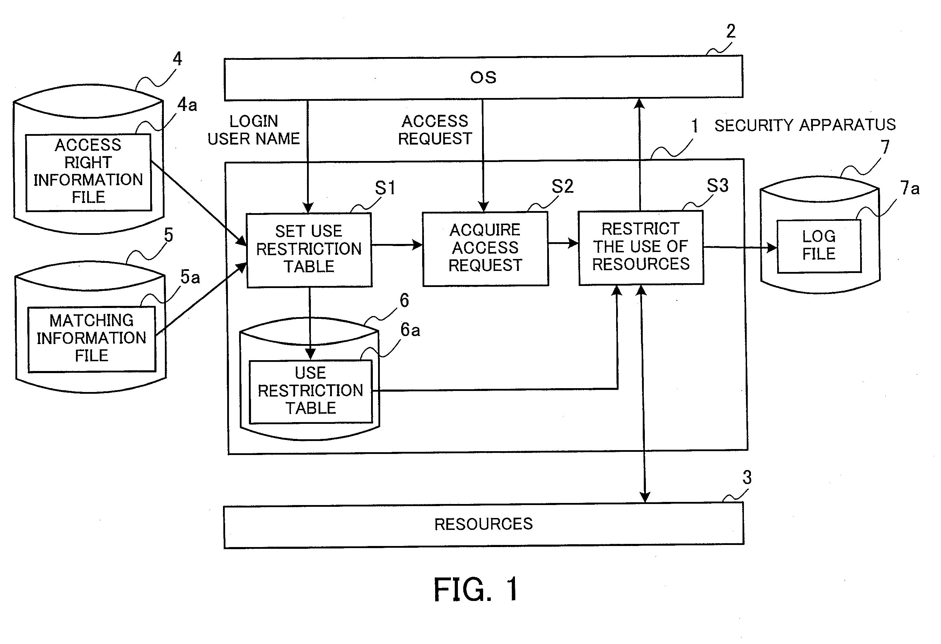

Fig. 1 shows the concept of the present invention.

By loading a program to block information leaks according to the present invention, a computer operates as a security apparatus 1.

The security apparatus 1 is located between an operating system (OS) 2 and resources 3, to acquire access requests for the resources 3 from the OS 2 and allow or reject the requests based on preset access rights.

The OS 2 controls the entire operation of the apparatus. A process or application operates the resources 3 via the OS 2. The OS 2 has an access control function to restrict the use of files including read, write, move and copy. The resources 3 subjected to use restrictions by the security apparatus 1 are directed to apparatuses that enable information to be extracted or taken outside, such as printers, external storage media, memories being shared on a network, and port communication devices.

In addition, the security apparatus 1 can access an access right information file 4a in an access right information memory 4, a matching (check) information file 5a in a matching (check) information memory 5, a use restriction table 6a in a use restriction table memory 6, and a log file 7a in a log file memory 7.

The access right information file 4a stores, for each user, access right information on each of the resources 3, so that access right information for a user can be retrieved based on information identifying the user. The access right information indicates access rights on each function of a resource 3. For example, access permission or prevention is set for printing of files and for accessing prescribed ports, and access permission or prevention or read-only for accessing external storage media and for accessing storage media shared on a network. In a case of setting access permission to resources, an item indicating whether to record a log of operations on the resource can be set.

The matching information file 5a stores matching (check) information that is used to detect the validity of access right information retrieved from the access right information file 4a. Matching information is created and stored automatically at the time of setting access right information. Based on information identifying a user, matching information for the user is retrieved so as to determine whether corresponding access right information has been falsified or broken.

The use restriction table 6a shows use restriction information on each resource for each login user, which is set by reference to the access right information file 4a based on login user identification information (login user name).

The log file 7a stores a log of operations on the resources 3.

The operation of the security apparatus 1 will be described. The access right information memory 4 stores the access right information file 4a showing access rights for each user, and the matching information memory 5 stores the matching information file 5a showing matching information which is used to detect the validity of access right information. When a prescribed user logs in, the OS 2 gives his/her login user name to the security apparatus 1.

Upon reception of the login user name, the security apparatus 1 sets a use restriction table (step S1). Specifically, the apparatus 1 retrieves access right information for the user from the access right information file 4a based on the login user name. At this time, the apparatus 1 also extracts matching information based on the login user name to detect the validity of the retrieved access right information. Then the apparatus 1 checks the access right information by using the matching information to see if it has been falsified or broken. For example, matching information is created and stored based on access right information at a time of setting the access right information. Then corresponding information is created in the same manner based on access right information extracted at a time of setting a use restriction table, and is compared with the matching information being stored. The access right information is identified as valid when they match, and as invalid (falsified) when they do not.

When the access right information is identified as valid, resource use restrictions are set in the use restriction table 6a based on the retrieved access right information. When the access right information is identified as invalid, on the contrary, it means the access right information has been falsified, and access prevention to all resources is set in the use restriction table 6a. When the access right information includes information on whether to record a log, the information is set in the table 6a as well.

In the above process, the use restrictions on each resource for the login user are set in the use restriction table 6a.

Then, the security apparatus 1 acquires an access request for a resource 3 from the OS 2 (step S2). Since the OS 2 has the file access control function to reject unacceptable access to files, for example, for read, write, move and copy, the apparatus 1 acquires only requests that the OS 2 has allowed.

When acquiring an access request, the security apparatus 1 restricts the use of the resource (step S3). Specifically, the apparatus 1 detects the resource specified by the request, and retrieves use restriction information on the resource from the use restriction table 6a. If the use restriction information shows access prevention, the apparatus 1 rejects the access and informs the OS 2 of this matter. If the access is allowed, on the contrary, the apparatus 1 gives the request to the resource to perform the requested operation. If the use restriction information indicates read-only, the apparatus 1 allows the access only when the request is a read request. In addition, if the use restriction information indicates that a log of operations on the resource is required, the apparatus 1 records a log of operations in the log file 7a of the log file memory 7.

According to this process, the security apparatus 1 creates use restriction information on resources for a login user based on access right information indicating access rights set for the user. Then, when acquiring an access request for a resource, the apparatus 1 determines whether to allow the access based on the use restriction information. Thus, at a time when a user makes an access request, use restrictions on each resource have been set in the use restriction table 6a. Therefore,access right information need not necessarily be checked, resulting in faster processing. In addition, only access requests allowed via access control by the OS 2 are to be checked, resulting in eliminating a wasteful (redundant) check process.

Further, at the time of setting the use restriction information, the validly of the access right information to be used is checked. This detects dishonest falsification or breakage of the access right information. Furthermore, resource use restrictions are set for each user and the restrictions are switched according to users.

Hereinafter, one embodiment of the present invention will be described in detail in a case of controlling access to external devices/printers/networks/communication ports. In the following description, access rights set for each user are called a policy and an access right information file composed of policies is called a policy file.

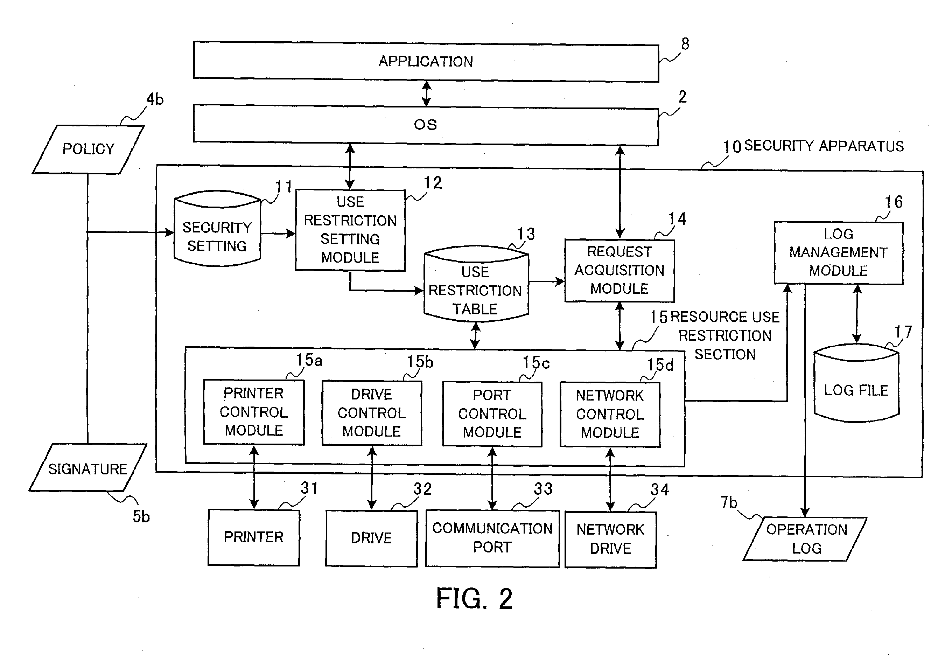

Fig. 2 shows the construction of a security apparatus according to one embodiment of the present invention.

The security apparatus 10 is located between an OS 2 and various resources. The OS 2 is connected to an application 8, and makes an access request for a resource via the security apparatus 10 according to the process of the application 8. The resources include a printer 31, a drive 32, a communication port 33, and a network drive 34.

The application 8 operates with an application program, and makes an access request for a resource via the OS 2 to operate the resources. Upon reception of the access request or when system control requires operation on a resource, the OS 2 makes an access request for the resource via the security apparatus 10.

The printer 31 prints out data specified by a printing request. The printed matter can be taken out to the outside. Both local and network printing of the printer 31 are controlled by the security apparatus 10.

The drive 32 reads and writes data from/to external storage media in response to read/write requests. The external storage media storing data can be taken out to the outside. "The drive 32" refers to drives that allow data to be taken out to the outside via external storage media. The external storage media are removable disks such as FDs, MOs, universal serial bus (USB) memories, and CDs. It should be noted that hard disks are excluded.

The communication port 33 communicates data with an external device over a communication network and sends data from a communication port specified by a transmission request. Thus the data is taken out to the outside.

The network drive 34 shares a memory with external devices over a network, and data being stored in a local memory is taken out in response to read requests from the external devices.

The security apparatus 10 of the present embodiment prevents information from being taken out to the outside under use restrictions on the above resources. The program modules of the security apparatus 10 will be now described, which describe processes that the apparatus 10 executes to realize prescribed functions. The functions to be realized are referred to as the names of the program modules.

The security apparatus 10 has a security setting memory 11, a use restriction setting module 12, a use restriction table memory 13, a request acquisition module 14, a resource use restriction section 15, a log management module 16, and a log file memory 17.

The security setting memory 11 serves as an access right information storage means for storing a policy file 4b and a signature (check) file 5b. The policy file 4b is composed of policies set uniquely to users. The signature file 5b is composed of signature information which is created at the time of setting a policy and is used for detecting whether a policy has been modified on purpose.

The use restriction setting module 12 serves as a use restriction table setting means, and when receiving a login user name from the OS 2, extracts a corresponding policy and signature information corresponding to the login user name from the security setting memory 11 to check the validity of the policy based on the signature information. When the policy has been identified as valid, the module 12 sets resource use restrictions in a use restriction table for the user based on the policy. In the example of Fig. 2, the use restriction table shows use restrictions on each of the printer 31, the drive 32, the communication port 33, and the network drive 34. For example, the table shows whether the use restrictions are applied (control state ON/OFF), a type of use restrictions (control type), and items which are free from the use restrictions. When the policy has been identified as invalid, on the contrary, resource use restrictions are set so that the user cannot access any resources. The use restriction table created for each user is stored in the use restriction table memory 13.

The use restriction table memory 13 stores, for each user, a use restriction table created by the use restriction setting module 12.

The request acquisition module 14 serves as a request acquisition means for acquiring an access request for a resource from the OS 2 before operating the resource. Upon reception of the access request, the module 14 drives the resource use restriction section 15 and gives the request.

The resource use restriction section 15 serves as a use restriction means for restricting the use of resources based on the use restriction table. The section 15 is composed of a printer control module 15a, a drive control module 15b, a port control module 15c, and a network control module 15d.

The printer control module 15a starts in response to a printing request for the printer 31, and allows or rejects printing from the printer 31 by reference to the use restriction information on the printer in the use restriction table.

The drive control module 15b starts in response to an access request (read/write request) for the drive 32, and restricts the use of the drive by reference to the use restriction information on the drive in the use restriction table. When access prohibition is set as a control type, both read and write requests are rejected. When permission is set, both read and write requests are allowed. When read-only is set, only read requests are allowed and write requests are rejected.

The port control module 15c starts in response to an access request (data transmission request) for the communication port 33, and allows or rejects data transmission from the communication port 33 by reference to the use restriction information on the communication port in the use restriction table.

The network control module 15d starts in response to an access request (read/write request from/to a shared memory) for the network drive 34, and restricts the use of the network (drive) by reference to the use restriction information on the network (drive) in the use restriction table. When access prohibition is set as a control type, both read and write requests are rejected. When permission is set, both read and write requests are allowed. When read-only is set, only read requests are allowed and write requests are rejected.

The log management module 16 starts when a control module of the resource use restriction section 15 detects that use restriction information on a corresponding resource indicates that a log of operations on the resource is required, and stores the log of operations on the resource in a log file in the log file memory 17. In addition, in response to a request from an external device or periodically, the module 16 transmits the log file as an operation log 7b to the external device.

The log file memory 17 stores the log file created by the log management module 16.

With the module structure described above, the security apparatus 10 of the present embodiment restricts the use of resources.

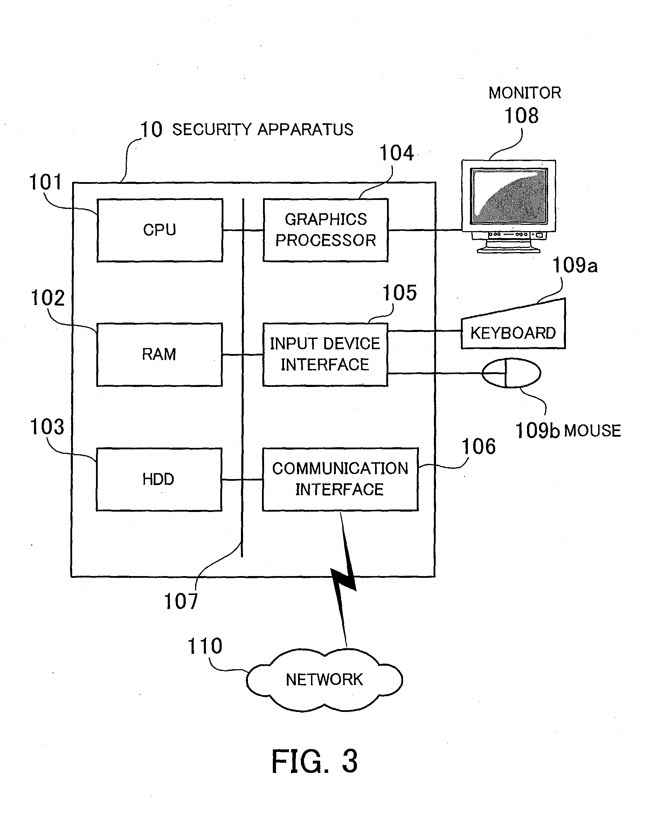

The hardware construction of the security apparatus 10 will be now described. Fig. 3 shows the hardware construction of the security apparatus according to this embodiment of the present invention.

The security apparatus 10 has a central processing unit (CPU) 101 for controlling the entire operation of the security apparatus 10, a random access memory (RAM) 102, a hard disk drive (HDD) 103, a graphics processor 104, an input device interface 105 and a communication interface 106, which are connected to each other via a bus 107.

The RAM 102 temporarily stores at least part of OS program and application programs to be executed by the CPU 101. The RAM 102 also stores various data necessary for CPU processing. The HDD 103 stores the OS and application programs. The HDD 103 also stores other information data including the policy file 4b, the signature file 5b, the use restriction table, and the log file.

The graphics processor 104 is connected to a monitor 108 to display images on the monitor 108 according to commands from the CPU 101. The input device interface 105 is connected to a keyboard 109a and mouse 109b and transfers signals from the keyboard 109a and mouse 109b to the CPU 101 via the bus 107.

The communication interface 106 is connected to a network 110 and communicates data with external devices over the network 110. The communication interface 106 has at least one communication port to communicate data with external devices via the communication port. The interface 106 transmits/receives read/write requests for a memory shared on the network and transmits/receives data in the memory, so as to share files being stored in the local HDD 103 and the HDDs of external devices.

With the hardware construction as described above, the processing functions of this embodiment can be realized.

The operation of the security apparatus 10 will be now described.

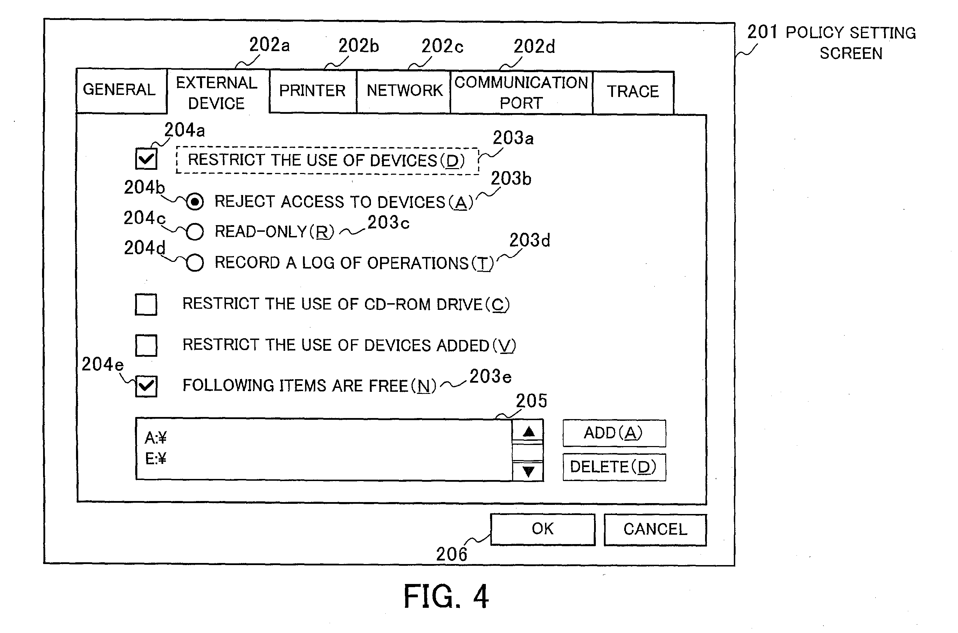

Policies set in the security apparatus 10 will be first described. When an administrator who is allowed to set resource use restrictions sets resource use restrictions for a specified user, a policy is created. Fig. 4 is an example of a policy setting screen of this embodiment.

After identifying the administrator to set resource use restrictions, the policy setting screen 201 appears. By completing the policy setting screen 201, a policy for a user is created.

The policy setting screen 201 includes resource buttons (external device 202a, printer 202b, network 202c, communication port 202d) for selecting a resource, restriction contents 203a, 203b, 203c, 203d and 203e and corresponding check buttons 204a, 204b, 204c, 204d, and 204e for selecting use restrictions.

In Fig. 4, the administrator is setting use restrictions on the external device 202a. Items for setting use restrictions on external devices are displayed. The restriction contents "restrict the use of external devices" 203a are for setting an item on whether use restrictions are applied. By checking the check box 204a, the administrator can restrict the use of external devices. Unchecking the check box 204a means that no use restrictions are applied to the devices and both read and write are allowed. In a case where the check box 204a is checked to restrict the use, a control type can be selected out of three selections: "reject access to devices" 203b; "read-only" 203c; and "record a log of operations" 203d. The item 203b means that both read and write operations are rejected. The item 203c means that read operations are allowed and write operations are not. The item 203d means that both read and write operations are allowed and a log of operations is to be kept.

In this way, control ON/OFF and a control type of the use restrictions are set.

In addition, by clicking the check box 204e corresponding to an item "following items are free" 203e, the administrator can specify devices free from the use restrictions. By entering the name of the devices in a device input box 205, the devices are made free from the use restrictions, meaning free access.

In Fig. 4, the check box 204e is selected and use restriction control is set ON to restrict the use of external devices. A control type "reject access to devices" is set by selecting the check box 204b. In addition, drives A and E written in the device input box 205 are made free from the use restrictions. Use restrictions on the other resources can be set in the same way.

By clicking the OK button 206 after finishing to set the use restrictions, a policy is created based on the set data and stored in the security setting memory 11.

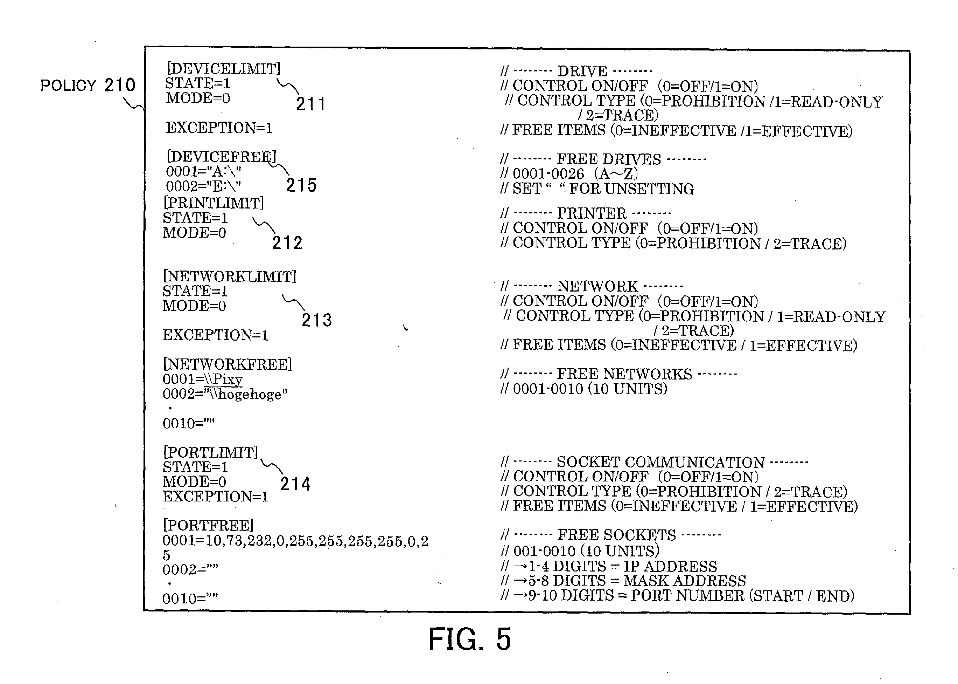

Fig. 5 shows a policy example according to this embodiment of the present invention. The policy 210 of Fig. 5 shows use restrictions on resources: [DEVICELIMIT] 211 for drive; [PRINTLIMIT] 212 for printer; [NETWORKLIMIT] 213 for network; and [PORTLIMIT] 214 for communication port.

For example, [DEVICELIMIT] 211 indicates use restrictions on external devices shown in Fig. 4. That is, ON (STATE=1) is set as control state, access prohibition (MODE=0) as control type. Drives A and E are set as free drives 215.

Similarly, for the other resources, as use restrictions [PRINTLIMIT] 212 for printer, [NETWORKLIMIT] 213 for network drive, and [PORTLIMIT] 214 for communication port, ON (STATE=1) is set as control state, and access prohibition (MODE=0) as control type.

At the time of creating a policy, signature information for detecting falsification of the policy and a password for identification are created and stored in the security setting memory 11.

In the above process, a policy and signature information for detecting falsification of the policy are stored for each user in the security setting memory 11. When a user logs in, a process of creating a use restriction table for the user starts.

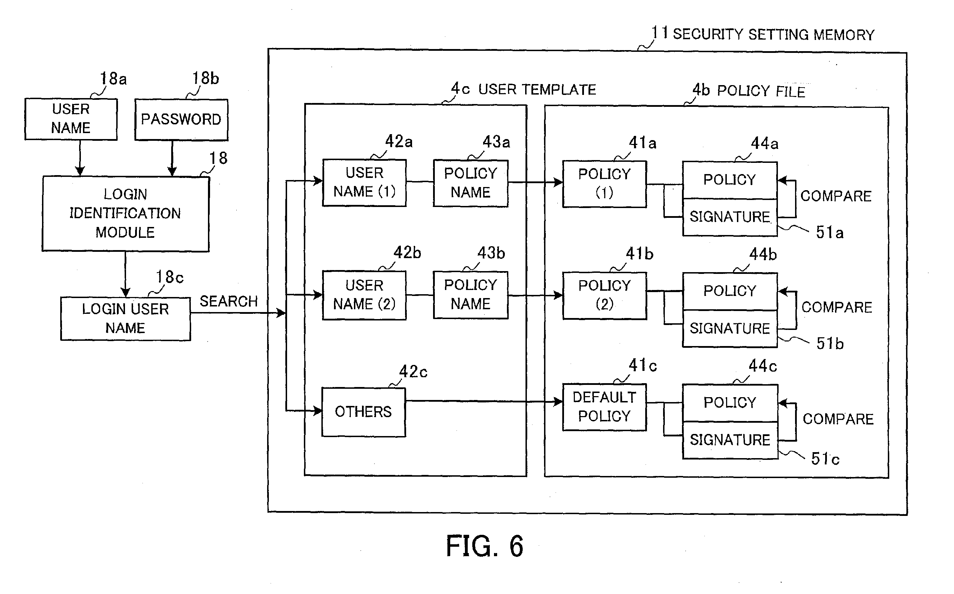

Next explanation is about how the security apparatus 10 operates when a user logs in. Fig. 6 shows a policy detection process at the time of user login according to this embodiment of the present invention.

The security setting memory 11 stores a policy file 4b, a user template 4c indicating a correspondence between a policy and a user name, and a signature file 5b not shown.

The policy file 4b is composed of policies, that is, a policy (1) 41a, a policy (2) 41b, ... corresponding to users. In addition, a default policy 41c has been also prepared for unspecified users.

In the user template 4c, a user name and a policy name are related to each other for finding a policy corresponding to a user. In the user template 4c, the policy names 43a, 43b, ... are related to the user names 42a, 42b, .... Others 42c is related to a default policy 41c so that the policy 41c is selected when a user name does not exist.

When a user logs in, the login identification module 18 identifies the user. The module 18 can be arranged inside or outside the security apparatus 10.

A procedure of finding a policy will be now described. When a user logs in tothe OS 2, a user name 18a and password 18b entered by the user are entered to the login identification module 18. The module 18 identifies the user based on the password 18b. When the user is certified, the module 18 sends user identification information as his/her login user name 18c to the use restriction setting module 12.

The use restriction setting module 12 searches the user template 4c for a user name corresponding to the login user name 18c. When the user name exists, the module 12 obtains a corresponding policy name. For example, when the login user name 18c is the user name (1) 42a, the policy name 43a is obtained. When a user name does not exist in the user template 4c, Others 42c is selected.

Then, the module 12 searches the policy file 4b for a corresponding policy based on the policy name obtained from the user name. For example, when the policy name 43a is obtained, the policy (1) 41a corresponding to the policy name 43a is detected. For another example, when others 42 is obtained, the default policy 41c is selected.

Before taking out information from a detected policy, the policy is checked to see if it has been falsified. Signature information (policy) 44a, 44b, ..., 44c is created from the detected policy 41a, 41b, ..., 41c and is compared with signature information 51a, 51b, ..., 51c which was set at the time of creating the policy and is taken out from the signature file 5b. When the policy is identified as untouched, the policy 41a, 41b, ..., 41c is extracted to create use restriction information. When the policy is identified as falsified, use restriction information indicating access prohibition to all resources is created. The created use restriction information is set in a use restriction table for the user and stored in the use restriction table memory 13.

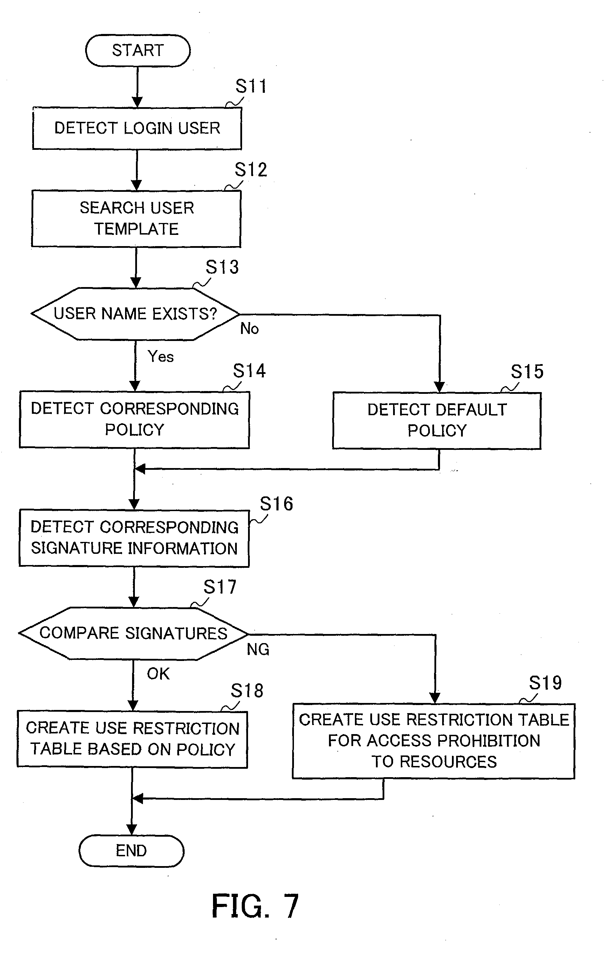

A procedure after user login until creation of a use restriction table will be described with reference to a flowchart of Fig. 7.

A policy and signature information for each user have been set in the policy file 4b and the signature file 5b. This procedure starts when the security apparatus 10 receives a notification of a user login from the OS 2.

[Step S11] Identify the login user based on the user name and password and obtain his/her login user name identifying the user.

[Step S12] Search the user template for a user name based on the login user name.

[Step S13] Determine whether the corresponding user name exists. The process proceeds on to step S14 when it exists; and to step S15, otherwise.

[Step S14] Detect a policy for the user based on the policy name corresponding to the user name. The process goes on to step S16.

[Step S15] Obtain a default policy.

[Step S16] Search the signature file for signature information corresponding to the obtained policy or default policy.

[Step S17] Create signature information from the obtained policy or default policy, and compare it with the signature information obtained from the signature file. The process goes on to step S18 when the information match; and to step S19, otherwise.

[Step S18] Create a use restriction table based on the policy or the default policy and finish the process.

[Step S19] Create a use restriction table prescribing access prohibition to all resources and finish the process.

By performing the above process, a resource use restriction table based on a policy preset for a login user is created. At the time of creation of the table, the policy is checked by using signature information to see if it is valid. Therefore, a use restriction table can be created from only a valid policy, and preset use restrictions are applied. When the validity is not certified, a use restriction table prescribing use prohibition to all resources is created, so as to prohibit the use of the resources. As a result, dishonest use of resources can be avoided.

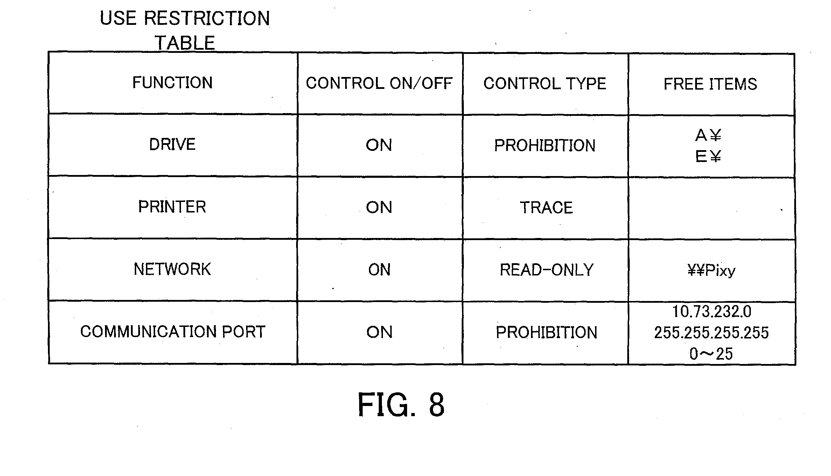

Next explanation is about the use restriction table which is created as described above. Fig. 8 shows an example of the table according to this embodiment of the present invention.

Control ON/OFF indicates whether use restrictions are applied. ON means that the restrictions are applied while OFF means free from the restrictions. In a case of control ON, corresponding control type is effective. In a case of control OFF, all operations are allowed.

Control mode is effective when the control is set ON, and is selected from three modes: prohibition; read-only; and trace. It should be noted that read-only cannot be selected for some resources such as the printer. Prohibition means that all operations are rejected. Trace means that all operations are allowed and a log of operations is to be recorded. Read-only means that read operations are allowed but write operations are not.

Free items are effective when the control is set ON. Specified items are free from the use restrictions and all operations are allowed.

Use restrictions are set on each function (type) of resource (drive, printer, network (shared memory), communication port). In this figure, as use restrictions on drive, control is set ON and control type is prohibition. Drives A and E are made free from the use restrictions. That is, access requests to drives other than the drives A and E are all rejected. Access requests to the drives A and E are all allowed. Similarly, as use restriction for printer, control is set ON and control type is trace. Printing requests are allowed and a log of operations is to be recorded. As use restrictions on network (shared memory), control is set ON, control type is read-only, and a free item is ¥¥Pixy. That is, excluding the directory ¥¥Pixy, read operations on shared memories are allowed and write operations are not. As use restrictions on communication port, control is set ON, control type is prohibition, and free items are "10.73.232.0, 255.255.255.255, 0-25". That is, transmission requests are all rejected, excluding transmission requests for an IP address and mask address (10.73.232.0, 255.255.255.255) and ports (0-25).

Next explanation is about a case where the OS 2 sends an access request for a resource after a use restriction table is created at the time of user log in.

The request acquisition module 14 acquires an access request for a resource sent from the OS 2. The module 14 drives the resource use restriction section 15 and gives the request. The section 15 restricts the use of the resource by referring to the use restriction table. The section 15 has control modules corresponding to resources. These modules restrict the use of corresponding resources in the same manner.

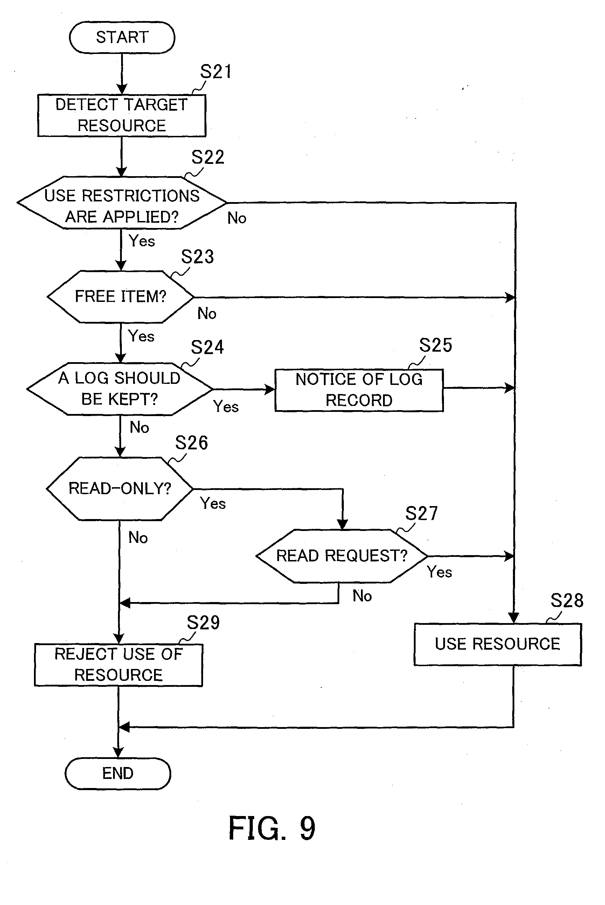

Fig. 9 is a flowchart showing how to restrict the use of resources, according to this embodiment of the present invention. The use restriction table shown in Fig. 8 is used and the control type is selected out of prohibition, read-only, and trace. Prohibition means that all operations are rejected. Read-only means that only read operations are allowed. Trace is that all operations are allowed and a log of operations is to be recorded. A log of operations is not necessary for prohibition and read-only.

The following process starts when an access request is acquired.

[Step S21] Determine which resource is a target resource.

[Step S22] Extract use restriction information on the target resource from the use restriction table and determine whether use restrictions should be applied (control ON or OFF). The process goes on to step S28 in a case of control OFF.

[Step S23] Check free items to determine whether the target resource is free from the use restrictions. The process goes on to step S28 when the target resource is free, meaning free access.

[Step S24] Restrict the use of the resource. In addition, determine based on the use restriction information whether a log of operations should be recorded. The process goes on to step S26 when the log is not necessary.

[Step S25] Instruct the log management module to start a log recording process. The process goes on to step S28.

[Step S26] Determine whether the control type is read-only. If not, it means that the control type is prohibition, and the process goes on to step S29.

[Step S27] Determine whether the access request is a read request. If not, the process goes on to step S29.

[Step S28] Allow the request and operate the resource because of control=OFF, control type=trace, or control type=read-only and access request=read request. Then the use restriction control ends.

[Step S29] Reject the request and notify the OS 2 of the rejection because of control type=prohibition, or control type=read-only and access request=write request. Then the use restriction control ends. The rejection notification is given via the OS 2 to an application sending the access request, so that the application displays an error message.

With the above process, the use of various resources is controlled based on a use restriction table set at a time of user login. This results in minimizing load in the resource use restriction process, and the processing performance does not deteriorate.

Next explanation is about creation of a log file by the log management module 16. Activated by the resource use restriction section 15, the module 16 records and stores a log of operations on resources in a log file memory 17. The memory 17 is exclusively operated by the log management module 16 so as not to delete any data by users before transmitting to a server. The log is sent to the server periodically.

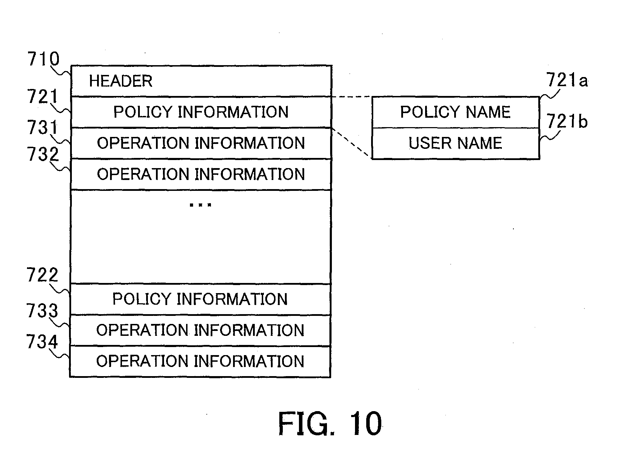

The log file will be next described. Fig. 10 shows an example of a log file format according to this embodiment of the present invention.

The log file is composed of a header 710, policy information 721, 722, ..., and operation information 731, 732, .... The header stores version information and so on.

Each piece of policy information 721, 722, ... is composed of the policy name 721a of a policy used in the use restriction process, and the corresponding user name 721b.

The operation information 731, 732, 733, 734, ... stores a log of operations recorded in a case where control type is trace. A plurality of operation information is created for each piece of policy information. In this figure, operation information 731 and 732 are set for policy information 721, and operation information 733 and 734 for policy information 722.

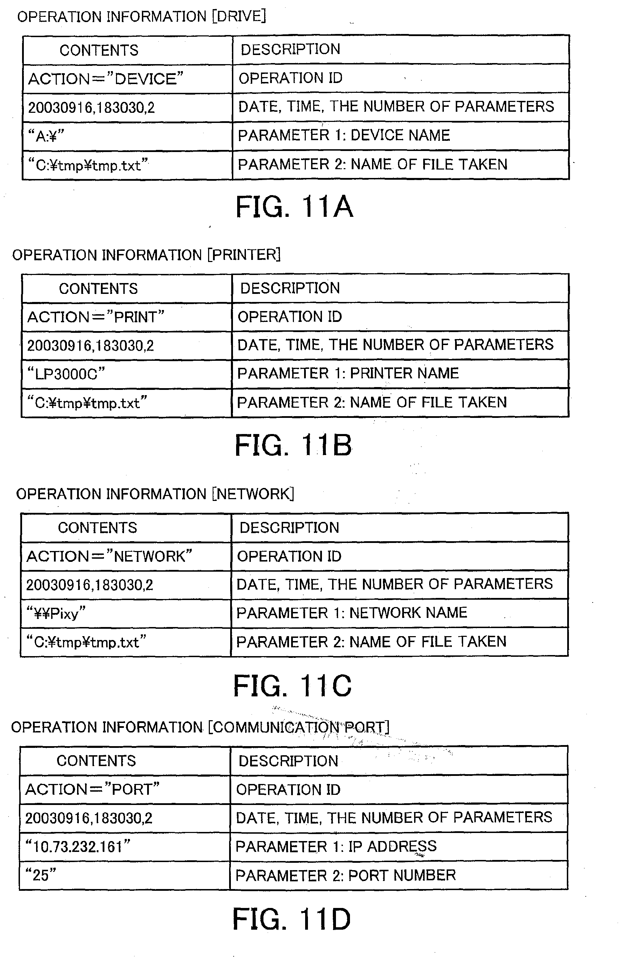

The contents of operation information are different according to resources. Figs. 11A to 11D show the contents of operation information in the log file according to this embodiment.

As the operation information for drive as a resource, an operation ID identifying an operation, an operation date and time, the number of parameters recorded in operation, and the parameters are recorded. In Fig. 11A, an operation indicated by an operation ID "ACTION="DEVICE"" is performed "at 18:30:30 on September 16, 2003." The number of parameters is "two". Parameters 1 and 2 indicate the name of device and a file taken out, respectively. Therefore, these parameters mean that device "A" was accessed to take out a file "C:¥tmp¥tmp.text".

The operation information for printer has the same factors excepting that parameters 1 and 2 indicate the name of a printer and the name of a file printed, respectively. Therefore, Fig. 11B shows an operation indicated by the operation ID "ACTION="PRINT"" is performed "at 18:30:30 on September 16, 2003." The number of parameters is "two". A printer "LP3000C" was used to print a file "C:¥temp¥tmp.txt".

The operation information for network also has the same factors excepting that parameters 1 and 2 indicate the name of a network and the name of a file accessed, respectively. Fig. 11C means that an operation indicated by the operation ID "ACTION="NETWORK"" was performed "at 18:30:30 on September 16, 2003." The number of parameters is "two". And a file "C:¥tmp¥tmp.txt" was taken out from a directory "¥¥Pixy".

The operation information for communication port also has the same factors excepting that parameters 1 and 2 indicate an IP address and a port number, respectively. Fig. 11D means that an operation indicated by the operation ID "ACTION="PORT"" was performed "at 18:30:30 on September 16, 2003." The number of parameters is "two". And data was transmitted from a port number "25" to an IP address "10.73.232.161".

Such a log of operations is kept and periodically sent to the server, so that the administrator can grasp the use of resources. The operation log is exclusively used so that users cannot accessit.Therefore, the log can be transmitted to the server without fail.

The above-described processing functions are actually implemented on a computer system with a set of computer programs describing processing contents of the intended functions of the embodiment. The programs are stored in a computer-readable storage medium. Suitable computer-readable storage media include magnetic storage media, optical discs, magneto-optical storage media, and solid state memory devices. Magnetic storage media include hard disk drives (HDD), flexible disks (FD), and magnetic tapes. Optical discs include digital versatile discs (DVD), DVD-random access memory (DVD-RAM), compact disc read-only memory (CD-ROM), CD-recordable (CD-R), CD-rewritable (CD-RW). Magneto-optical storage media include magneto-optical discs (MO).

To distribute program products, portable storage media, such as DVD and CD-ROM, are used. Network-based distribution of software program has also become popular, in which master program files stored in a server computer are downloaded to user computers via a network.

Each computer stores necessary programs in its local storage unit, which have previously been installed from a portable storage medium or downloaded from a server computer. The computer performs intended functions by executing the programs read out of the local storage unit. As an alternative way of program execution, the computer may execute programs, reading out program files directly from a portable storage medium. Another alternative method is that the computer dynamically downloads programs from a server computer when they are demanded and executes them upon delivery.

With the above-described program of the present invention to block information leaks, a computer creates a use restriction table for a login user based on access right information set for the user. Then the computer acquires an access request for a resource from an OS before operating the resource, and restricts the use of the resource by reference to the use restriction table. Therefore, when the OS makes an access request, the use of a target resource is restricted by reference to the use restriction table set at a time of user login, resulting in faster processing. Since a use restriction table is set uniquely to each user, a table to be referred to can be switched according to a user.

In addition, an apparatus for blocking information leaks according to the present invention sets resource use restrictions in a use restriction table for a login user, based on access right information on resources set for the user. When acquiring an access request for a resource from an OS, the apparatus restricts the use of the resource by reference to the use restriction table. Therefore, by the time when an access request for a resource is made, the use of the resource can be restricted by reference to the use restriction table set at a time of user login. This results in faster processing.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications may be regarded as falling within the scope of the invention in the appended claims.

According to the invention, processing of access requests is only performed for those requests allowed by the OS, thereby reducing the processing load.

Also, by checking the access right information (policy) for a user against matching (signature) information, security is enhanced.

## Claims

1. A program to block information leaks via access control to resources which, when executed by a computer, causes the computer to perform the steps of:
storing, for each user, access right information indicating access rights on each of said resources, and when a prescribed user logs in, retrieving the access right information for the user, and creating a use restriction table prescribing use restrictions on each of the resources for the user based on the access right information retrieved;
acquiring an access request for one of said resources from an operating system before operating said one of the resources; and
obtaining use restriction information on said one of said resources specified by said access request from said use restriction table and restricting use of said one of the resources according to the use restriction information when acquiring the access request.

2. The program according to claim 1, wherein said step of creating said use restriction table includes determining whether said access right information has been falsified, and creating said use restriction table so as to reject all access of said user to said resources when the access right information is identified as falsified.

3. The program according to claim 1 or 2, wherein:
said access right information includes information specifying at least access control to at least one out of printers, external storage media, shared storage media, and prescribed ports for communicating data; and
said step of creating said use restriction table includes prescribing said use restrictions on a group of said resources subject to said access rights.

4. The program according to claim 3, wherein said access right information specifies one out of access permission, access prevention, read-only, and trace as said access rights, trace meaning that access is permitted and a log of operations is to be recorded.

5. The program according to claim 3 or 4, wherein said access right information includes information on resources having free access rights out of said resources subject to said access rights.

6. The program according to any preceding claim, wherein said step of creating said use restriction table includes setting preset prescribed information in the use restriction table when there is no access right information for said user.

7. The program according to any preceding claim, wherein:
said access right information includes information on whether a log of operations on said resources is required; and
said step of restricting use of said one of said resources includes recording and storing said log of operations on said one of the resources in a log file in a case where said use restriction table indicates that the log is required.

8. The program according to claim 7, wherein said log is exclusively stored and read in/from said log file.

9. The program according to claim 7 or 8, wherein said step of restricting use of said one of said resources includes periodically sending said log file to a management server for monitoring information leaks from said computer.

10. A computer-readable storage medium storing a program to block information leaks via access control to resources, said program, when executed by a computer, causing the computer to perform the steps of:
storing, for each user, access right information indicating access rights on each of said resources, and when a prescribed user logs in, retrieving the access right information for the user, and creating a use restriction table prescribing use restrictions on each of the resources for the user based on the access right information retrieved;
acquiring an access request for one of said resources from an operating system before operating said one of the resources; and
obtaining use restriction information on said one of said resources specified by said access request from said use restriction table and restricting use of said one of the resources according to the use restriction information when acquiring the access request.

11. An apparatus for blocking information leaks via access control to resources, comprising
access right information storage means for storing, for each user, access right information indicating access rights on each of said resources;
use restriction table setting means for, when a prescribed user logs in, retrieving access right information for the user from said access right information storage means and creating a use restriction table prescribing use restrictions on said each of said resources for the user based on the access right information retrieved;
use restriction table storage means for storing said use restriction table;
request acquisition means for acquiring an access request for one of said resources from an operating system before operating the one of the resources; and
use restriction means for obtaining use restriction information on said one of said resources specified by said access request from said use restriction table and restricting use of said one of the resources according to the use restriction information obtained.
